# EUROPÄISCHE PATENTSCHRIFT

(11) **EP 0 474 095 B1**
(45) Veröffentlichungstag und Bekanntmachung des Hinweises auf die Patenterteilung: **02.11.1995**
(21) Anmeldenummer: 91114351.9
(22) Anmeldetag: 27.08.1991
(51) Int. Cl.: A23P 1/08, C08L 3/00, B65D 65/46

(54) **Zusammensetzung für das Formen biologisch abbaubarer Gebrauchsgegenstände und Verfahren zur Herstellung derselben**
Composition and process for forming biodegradable consumer products
Composition et procédé pour former des articles d'usage biodégradable

(30) Priorität: 03.09.1990 CH 2853/90
(43) Veröffentlichungstag der Anmeldung: 11.03.1992
(73) Patentinhaber: BÜHLER AG, 9240 Uzwil (CH)
(72) Erfinder: Millauer, Christian, CH-9244 Niederuzwil (CH)
(74) Vertreter: Büchel, Kurt F., Dr.

(56) Entgegenhaltungen:
- EP-A- 0 087 847
- EP-A- 0 303 460
- WO-A-83/01729
- WO-A-88/06849
- WO-A-91/12186
- DE-A- 2 035 393
- DE-A- 3 937 168
- FR-A- 2 380 742
- GB-A- 2 190 093
- GB-A- 2 203 928
- US-A- 4 356 202
- US-A- 4 613 509

## Beschreibung

Die Erfindung bezieht sich auf eine Zusammensetzung für das Formen von biologisch abbaubaren, insbesondere zum einmaligen Gebrauch bestimmten Gebrauchsgegenständen nach dem Oberbegriff des Anspruches 1 bzw. auf ein Verfahren zur Herstellung der Gebrauchsgegenstände nach dem Oberbegriff des Anspruchs 4.

Biologisch vollständig abbaubare Gebrauchsgegenstände, die z.B. als Behälter für Lebens- bzw. Arzneimittel dienen, sind an sich bekannt. Diese sind auf Gelatine- bzw. reiner Stärkebasis hergestellt, bedingen aber umfangreiche, aufwendige und abfallträchtige Verfahrensschritte. So wird beispielsweise in der DE-OS-3836786 die Herstellung eines solchen Behälters, der eßbar ist, beschrieben, bei dem, vergleichbar den bekannten Waffeln, eine wäßrige Teigmischung nach einem Vorbackvorgang durch neuerliches Backen in die gewünschte Form gebracht wird. Dieser äußerst wäßrige Teig, ein sogenannter Slurry-Teig, muß unter erheblichem Erhitzen vorgebacken werden. Der fertige Behälter selbst kann zwar verhältnismäßig spröde sein, wird sich aber im allgemeinen zur Ausbildung von eher weichen Formen, wie beispielsweise Eiswaffeltüten, eignen.

In der DE-A1-3712029 wird eine Zusammensetzung beschrieben, die sich zur Herstellung von druckgeformten Formkörpern eignet. Diese Zusammensetzung besteht im wesentlichen zu 72 bis 89,58 Gewichtsprozent aus chemisch nicht-modifizierter, aber isolierter Stärke, zu 10 bis 22 Gewichtsprozent aus Wasser. Eine analoge Zusammensetzung wird für die Durchführung eines Verfahrens beschrieben, das in der EP-B1-0118240 geoffenbart ist. Werden hier zwar etwas höhere Anteile an Wasser genannt, so handelt es sich auch in diesem Fall um aus Pflanzen, wie Kartoffeln und Getreiden isolierte Stärke. Außerdem beschreibt die EP-B1-0118240 ein Verfahren, bei dem eine solche Zusammensetzung mittels Spritzgußtechnik zu einem Gegenstand verformt wird. Dabei wird diese Zusammensetzung auf Temperaturen erhitzt, die über der Glastemperatur und dem Schmelzpunkt der Zusammensetzung liegen, und anschließend in einen Formhohlraum eingespritzt, worin sie abgekühlt wird.

In der EP-A1-0 087 847 wird ein Verfahren zur Herstellung von gelatinierten Stärkeprodukten beschrieben, insbesondere von relativ steifen Schaummaterialien, bei dem kommerziell verfügbare Stärke in zerkleinerter oder pulverisierter Form, gegebenenfalls unter Zusatz von Wasser, in einem Extruder unter Anwesenheit eines Gas-bildenden Agens erhitzt und dann extrudiert wird.

Das Ziel der Erfindung ist es, einerseits die Zusammensetzung billiger und einfacher bereitzustellen, und andererseits das Verfahren zur Herstellung von biologisch abbaubaren Formkörpern sowohl einem unterschiedlichen Wassergehalt der Zusammensetzung anzupassen - wobei der Gesamtwassergehalt wesentlich unter dem eines Slurry-Teigs liegt -, als auch die zahlreichen Verwendungs- und Gestaltungsmöglichkeiten derartiger Gebrauchsgegenstände entsprechend variabel zu halten, wobei an sich bekannte und bereits beherrschte Verfahren der Kunststofftechnik zur Anwendung kommen, wie z.B. die Spritzgußtechnik, die gegebenenfalls, um den neuen Materialien Rechnung zu tragen, angepaßt werden müssen.

Die Lösung dieser Aufgabe gelingt durch die Verwirklichung der kennzeichnenden Merkmale des Anspruches 1 bzw. des Anspruches 4.

Vorteilhafte Weiterbildungen werden in den kennzeichnenden Merkmalen der abhängigen Ansprüche beschrieben.

Die in der erfindungsgemäßen Zusammensetzung wenigstens teilweise, vorzugsweise aber größtenteils, vorhandene, möglicherweise getrocknete Stärke liegt demnach in nicht-isolierter, nicht-modifizierter, roher und ungereinigter Form vor. Die Vorbereitungs- bzw. Aufschlußarbeit wird damit in vorteilhafter Weise herabgesetzt. Möglich sind also z.B. zu Mehl oder Grieß gemahlene Zerealien, wie insbesondere Weizen, Roggen, Hafer, Mais und Gerste. Besonders bevorzugt sind aber vermahlene Vollzerealien, bei denen Schalen und Spelzen, z.B. in Form von Kleie, mitgemahlen werden, wodurch, infolge der Faserstoffe, ein zusätzlicher, verstärkender Effekt erzielt wird, der noch erhöht wird, wenn zusätzlich cellulosehältige Teile zugesetzt werden.

Die Menge des Zusatzes an cellulosehältigen Teilen richtet sich nach den Anforderungen an Sprödigkeit bzw. Weichheit des herzustellenden Gebrauchsgegenstandes.

Der fakultative Zusatz von Weichmachern, Vernetzungsmitteln mit Katalysatoren, Ölen und/oder Fetten, Farbstoffen und - falls nicht genügend Roh-Faserstoffe in der Zusammensetzung vorhanden sind - auch von Faserstoffen gibt der Zusammensetzung unterschiedliche, vorteilhafte Eigenschaften.

So wird bei einem durchschnittlichen Wassergehalt von 10 bis 15 Gewichtsprozent im die Stärke enthaltenden Rohmaterial der Zusatz von Wasser bzw. Wasserdampf auf einen Gesamtwassergehalt von max. 20 bis 40 Gewichtsprozent - vorzugsweise 35 Gewichtsprozent - die Plastizität der Zusammensetzung erhöht, d.h., daß die Wärmebehandlung bei einer Temperatur unterhalb der Glastemperatur (Gelatinierungstemperatur) der Zusammensetzung durchgeführt werden kann.

Wird weniger Wasser bzw. Wasserdampf zugesetzt, so daß der Gesamtwassergehalt maximal 5 bis 35 Gewichtsprozent - vorzugsweise aber 12 bis 18 Gewichtsprozent - beträgt, so muß die Wärmebehandlung bei einer Temperatur oberhalb der Glastemperatur (Gelatinierungstemperatur) durchgeführt werden, um eine gleich gute Plastizität der Zusammensetzung zu erreichen. Als Weichmacher - die als Zusatz insgesamt nicht mehr als 30 Gewichtsprozent der Zusammensetzung ausmachen sollten - kommen, neben Wasser, beispielsweise auch noch polyvalente Alkohole und Zucker, wie Glycerin, Glykol, Glukose oder Sorbitol, in Frage.

Durch den Zusatz von Gleitmitteln, wie z.B. organischen Säuren, insbesondere von Stearinsäure,mit einem Anteil von 0,3 - 18 Gewichtsprozent der Zusammensetzung, wird die Verarbeitungsviskosität reduziert.

Der Zusatz von Vernetzungsmitteln, wofür sich beispielsweise Aldehydpolymere eignen, eventuell gemeinsam mit geeigneten Katalysatoren, wie Zitronen-, Ameisen-, Äpfel-, Ascorbin-, Wein-, Adipin- oder Essigsäure, erhöht die Viskosität und die Elastizität der Zusammensetzung, auch wird die Festigkeit und die Wasserabstoßung des Endprodukts verbessert, sowie Schimmelbildung verhindert. Durch die Zugabe von weiteren, geeigneten Ingredienzien wird Schädlingsbefall vorgebeugt. Die zugesetzten Mittel sollten nicht mehr als 5 Gewichtsprozent der Zusammensetzung betragen.

Die verschiedenen Additiva werden entweder vor oder in dem Extruder dem die Stärke enthaltenden, gemahlenen Rohmaterial zugemischt; diese Zusammensetzung wird - wie oben dargestellt - hinsichtlich der Glastemperatur unterschiedlich hoch erwärmt. Danach kann der Verformungsvorgang, je nach gewünschtem Produkt, auf diskontinuierliche oder kontinuierliche Weise erfolgen. Für verschiedene Anwendungen sollten die gewünschten, auf die erfindungsgemäße Weise herzustellenden Gegenstände möglichst resistent gegen Wasser sein. Dazu können entweder der Zusammensetzung Öle oder Fette oder andere, die Stärke unlöslich machende Substanzen wie Aldehyde (Glyoxal) oder Harze auf Formaldehydbasis (Melamin, Harnstoff) oder Kunststoffharze, wie Aethylenacryl-Copolymere, zugemischt werden, oder aber es wird der fertige Gegenstand mit einer wasserabstoßenden Schicht überzogen. Dies kann beispielsweise durch Ueberzug mit Lacken oder Folien geschehen. Damit wird zwar sein im wesentlichen auf seinem Wassergehalt beruhender, enzymatischer Abbau verlangsamt, seine fallweise gewünschte Wasserresistenz aber erhöht.

Das Beimischen von ungiftigen Farben - insbesondere von Lebensmittelfarben - erweitert die Anwendungsmöglichkeiten der nach dem erfindungsgemäßen Verfahren aus der erfindungsgemäßen Zusammensetzung hergestellten Gebrauchsgegenstände.

Die erfindungsgemäße Zusammensetzung eignet sich unter anderem besonders gut zur Herstellung von Verpackungsmaterialien jeder Art. Ein solcherart hergestelltes Verpackungsmaterial, das auch der Verpackung von Lebensmitteln dienen kann, man denke dabei an Eierkartons, Käseschachteln, Gemüse- oder Beerenbehältnisse, kann mit Rüstabfällen oder unverwendeten Resten gemeinsam weggeworfen und sogar kompostiert werden.

Eine andere interessante Verwendung der erfindungsgemäßen Zusammensetzung betrifft die Herstellung von Füllmaterial mit kleinem spezifischen Gewicht von 10 bis 50 g/l, vorzugsweise von 20g/l. Ein solches Füllmaterial, das beispielsweise anstelle von Kunststoffteilchen zum Schutz von Versandgut vor Beschädigung und Bruch verwendet werden kann, kann im Gegensatz zu jenem problemlos entsorgt werden. Füllmaterial der erfindungsgemäßen Art bietet sich insbesondere in Form von geblähtem Granulat an, jedoch ist genauso gut denkbar, ein solches Füllmaterial direkt in ein Behältnis rund um einen zu schützenden und/oder zu transportierenden Gegenstand zu schäumen.

Eine andere Verwendung der erfindungsgemäßen Zusammensetzung betrifft die Herstellung von Geschirr unterschiedlichster Form und Art, das beispielsweise in ähnlicher Weise wie bekanntes Wegwerfgeschirr aus Kunststoff oder Papier gebraucht werden kann. Im Gegensatz zu diesem kann es jedoch ohne Bedenken zusammen mit den Essensresten in den Abfall wandern und beispielsweise als Viehfutter weiterverwendet werden.

Das erfindungsgemäße Verfahren mit seinen Varianten wird im folgenden anhand eines in der Figur dargestellten Ablaufschemas beschrieben.

Das, wie oben dargestellt, zwar gereinigte, eventuell geschälte und getrocknete, aber sonst unbehandelte Rohmaterial wird entweder - im Fall von Zerealien - in einer Mühle gemahlen oder - bei manchen Ausgangsmaterialien, wie beispielsweise stärkehaltigen Früchten, Kartoffeln od.dgl. grob zerkleinert und vorgetrocknet in den Extruder eingebracht. Der Zusatz von Wasser bzw. von Wasserdampf, anderen Weichmachern, Vernetzungsmitteln mit geeigneten Katalysatoren oder anderen Additiva, wie Ölen, Fetten oder Farbstoffen, kann entweder vor dem Einbringen in den Extruder, beispielsweise in einen Mischer, oder auch direkt in den Extruder stattfinden.

Je nach dem Gesamtwassergehalt der im Extruder zu bearbeitenden Zusammensetzung wird bei geringer Wärmezufuhr die Zusammensetzung unterhalb ihrer Glastemperatur bei maximal 80° C gesintert, wobei die nötige Plastizität durch den Wassergehalt von maximal 40 Gewichtsprozent erreicht wird, oder - insbesondere bei geringeren Wassergehalten von z.B. 5 bis 35, vorzugsweise etwa 12 bis 18 Gew.% - bei höherer Wärmezufuhr und über 80 bis 90° C, vorzugsweise bei ca. 90°C für ungeblähte und bei über 140°C für geblähte Produkte plastifiziert bzw. gelatiniert. Gegebenenfalls wird die Zusammensetzung zur Senkung des Wassergehalts im und/oder nach dem Extruder entgast.

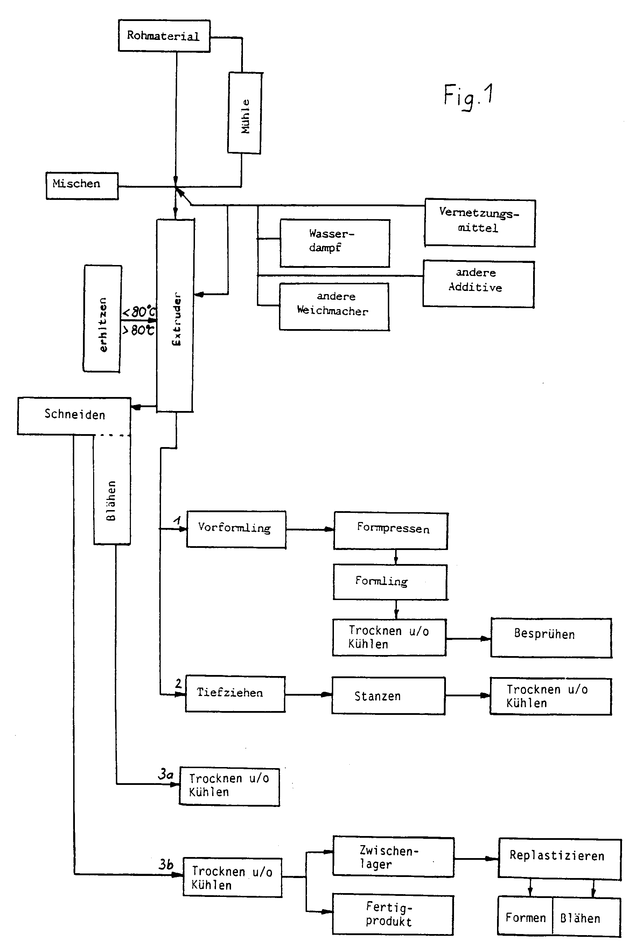

Danach kann die Zusammensetzung in verschiedener Form (gebläht oder ungebläht) vorliegen, so z.B. als Strang 1, Band 2, oder Granulat 3 und wird danach dem Verformungsvorgang unterworfen. Je nach Verfahren ist die vorliegende Zusammensetzung eher warm oder auch heiß, so daß die darauf folgenden Verfahrensschritte gegebenenfalls auch einen Kühl-Schritt beinhalten. Das Granulat wird erhalten, wenn bereits während des Verpreßvorgangs bzw. unmittelbar daran anschließend geschnitten wird. Der Strang 1 und das Granulat 3 werden im dargestellten Beispiel diskontinuierlich verformt. Der Strang 1 wird in Vorformlinge geteilt, die - noch plastisch - in Formlinge, eventuell unter Zufuhr von Wärme, gepreßt, danach getrocknet und/oder gekühlt und besprüht werden. Für die Weiterbehandlung des Granulats sind zwei Verfahrensabläufe gegeben, die in Fig.1 durch 3a und 3b gekennzeichnet sind. Entweder (3a) kann das Granulat 3 unter Hitzeeinwirkung gebläht (- vorzugsweise an der Düse direkt -) und getrocknet und/oder gekühlt werden, oder (3b) es kann unter Hitzeeinwirkung das in ihm enthaltene Wasser entfernt werden, wobei das Granulat 3 nach Trocknung und/oder Kühlung - gegebenenfalls in gewünschten Formen - direkt als Fertigprodukt vorliegt. Ebenso kann im letzteren Fall das Granulat 3 nach Trocknung und/oder Kühlung zwischengelagert werden. Unter Erhitzen, bei eventueller Additivzufuhr von beispielsweise Weichmachern und Vernetzern, wird es replastiziert und kann beispielsweise in einer Spritzgußmaschine, wie sie für die Vewrarbeitung von Thermo- oder Duroplasten verwendet wird, unter Druck geformt werden. Läßt man das replastizierte Granulat aber entspannen, so erhält man eine Schaumstruktur, was für gewisse Anwendungszwecke gewünscht sein kann.Das als Band 2 vorliegende Zwischenprodukt wird einem kontinuierlichen Verformungsvorgang unterworfen. Es wird durch Tiefziehen in die gewünschte Form gebracht, gestanzt und getrocknet und/oder gekühlt.

Die fertigen Formen können noch, falls gewünscht, mit einer wasserabstoßenden Imprägnierung überzogen werden und/oder aber auch getoastet werden, was die Verdichtung ihrer Oberfläche und damit die Wasserabstoßung verbessert.

Die einzelnen Schritte des oben dargestellten Verfahrens sind beispielhaft zu sehen und sollen im folgenden anhand von zwei Beispielen dargestellt werden:

### Beispiel 1

| Ausgangsmaterial: | |
|---|---|
| - gereinigtes, gemahlenes Weizengetreide mit 12% Wasser | 95.4 Gew% |
| - Zitronensäure | 0.3 Gew% |
| - Wasser | 4.0 Gew% |
| - Blähmittel (Natriumbicarbonat) | 0.3 Gew% |

| Extruder (z.B.Bühler DNDG-62/16-D): | |
|---|---|
| Heiztemperatur | 160°C |
| Extruderdüse | 2 Öffnungen mit 3mm Durchmesser |
| Schneiden | 2 Messer |
| Schneckendrehzahl | 440 Umdrehungen pro Minute |
| Drehmoment | 600 Nm |
| Durchsatz | 150 kg/h |
| Produkttemperatur vor der Düse | 200°C |
| Druck | 45 bar |

Hierbei entsteht ein loses Füllmaterial mit einem spezifischen Gewicht von 15 bis 29 g/l, das sich durch besonders elastische und dämpfende Eigenschaften auszeichnet, das im Wasser voll löslich ist und, in Erde eingegraben, in ca. einer Woche vollständig kompostiert ist.

### Beispiel 2

| Ausgangsmaterial: | |
|---|---|
| Vollweizenmehl mit 12% Wasser | 75 Gew% |
| Weizenkleie | 7 Gew% |
| Glyzerin (85%) | 5 Gew% |
| Wasser | 11.8 Gew% |
| Zitronensäure | 0.2 Gew% |

| Extruder (z.B. Bühler DNDG-62/16-D): | | |
|---|---|---|
| Heiztemperatur | | 40°C |
| Schneckendrehzahl | | 225 Umdrehungen pro Minute |
| Drehmoment | | 595 Nm |
| Durchsatz | | 94.2 kg/h |
| Druck | | 60 bar |
| a) | Extruderdüse | 60mm x 1mm, Schlitz |
| | extrudiertes Produkt | Stränge/Bänder |
| | Produkttemperatur vor der Düse | 95°C |
| | Formgebung | Tiefziehen, Beschichten |
| | Endprodukt | Becher, Schalen, Karton |
| b) | Extruderdüse | 16 Löcher mit 3mm Durchmesser |
| | Schneiden | 4 Messer |
| | extrudiertes Produkt | Granulat |
| | Produkttemperatur vor der Düse | 95-120°C |
| | Formgebung | Spritzprägen resp. Spritzgießen |
| | Endprodukt | Teller, resp. Formlinge aller Art |

## Patentansprüche

1. Für das Formen biologisch abbaubarer Gebrauchsgegenstände geeignete Zusammensetzung, enthaltend wenigstens eine natürliche Stärke und maximal 40 Gew.% Wasser, wobei die Stärke wenigstens teilweise als Bestandteil zerkleinerter Naturprodukte in Form von zerkleinerten, zu Mehl oder Grieß gemahlenen, gegebenenfalls getrockneten Zerealien, Früchten oder Feldfrüchten und zwar in Kombination mit den anderen Bestandteilen eben dieser Naturprodukte vorliegt, die einschließlich ihrer cellulosehaltigen Teile, wie Spelzen, Kleie und Schale, sowie gegebenenfalls Oelen und/oder Proteinen vorliegen.

2. Zusammensetzung nach Anspruch 1, dadurch gekennzeichnet, daß sie zusätzlich cellulosehältige Teile - insbesondere zwischen 5 und 15 Gewichtsprozent - enthält.

3. Zusammensetzung nach Anspruch 1 oder 2, dadurch gekennzeichnet, daß sie Additive, wie - insbesondere 5 bis 30 Gew.% - Weichmacher, beispielsweise polyvalente Alkohole; und/oder - insbesondere 5 - 10 Gew.% - Vernetzungsmittel, beispielsweise Aldehyde; und/oder - insbesondere 2 - 4 Gew.% - Katalysatoren, beispielsweise Zitronen-, Apfel-, Ascorbin-, Wein-, Adipin- oder Essigsäure, enthält.

4. Verfahren zur Herstellung eines Gebrauchsgegenstandes unter Verwendung der Zusammensetzung nach einem der Ansprüche 1 bis 3, bei dem die Zusammensetzung einer Wärmebehandlung - und gegebenenfalls einer Entgasung - zur Plastifizierung, Gelatinierung, bzw. Verpressung und darauf wenigstens einem Verformungsvorgang unterworfen wird, dadurch gekennzeichnet, daß die Wärmebehandlung bei einer Temperatur unterhalb der Glastemperatur bei 30-60° C, vorzugsweise bei 40° C, in einem Extruder vor sich geht, wobei die Substanz maximal 20-40 Gew.%, vorzugsweise 35 Gew.% Wasser enthält.

5. Verfahren zur Herstellung eines Gebrauchsgegenstandes unter Verwendung der Zusammensetzung nach einem der Ansprüche 1 bis 3, bei dem die Zusammensetzung einer Wärmebehandlung - und gegebenenfalls einer Entgasung - zur Plastifizierung, Gelatinierung, bzw. Verpressung und darauf wenigstens einem Verformungsvorgang unterworfen wird, dadurch gekennzeichnet, daß die Wärmebehandlung bei einer Temperatur oberhalb der Glastemperatur, bei 80-200° C, vorzugsweise bei 160-180° C, vor sich geht, wobei die Substanz maximal 5-35 Gew.%, vorzugsweise 12-18 Gew.% Wasser enthält.

6. Verfahren nach einem der Ansprüche 4 oder 5, dadurch gekennzeichnet, daß der Verformungsvorgang kontinuierlich vor sich geht, wobei die nach der Wärmebehandlung vorzugsweise strang- oder bandförmig vorliegende Zusammensetzung wenigstens einem der folgenden Schritte unterworfen wird: Formen, Schneiden, Tiefziehen, Stanzen, Trocknen bzw. Toasten.

7. Verfahren nach einem der Ansprüche 4 oder 5, dadurch gekennzeichnet, daß der Verformungsvorgang diskontinuierlich vor sich geht, wobei die nach der Wärmebehandlung - vorzugsweise als Strang oder Granulat vorliegende - Zusammensetzung wenigstens einem der folgenden Schritte unterworfen wird: Bereitstellen von Vorformlingen; Formpressen, insbesondere unter Einwirkung von Wärme; Trocknen; Besprühen; Zwischenlagern; Replastizieren, vorzugsweise unter Erhitzen; Formen, vorzugsweise Spritzgußformen; Toasten.

8. Verfahren nach einem der Ansprüche 4 bis 7, dadurch gekennzeichnet, daß zur Erhöhung der Wasserabstoßung der Zusammensetzung Öle oder andere geeignete Zusatzstoffe zugesetzt werden und/oder der Gebrauchsgegenstand mit einem entsprechenden Imprägniermittel, beispielsweise mit Lack oder in Form einer Folie, überzogen wird.

9. Verwendung einer Zusammensetzung gemäß einem der Ansprüche 1 bis 3 für das Herstellen von Verpackungsmaterial.

10. Verwendung einer Zusammensetzung gemäß einem der Ansprüche 1 bis 3 für das Herstellen von Füllmaterial mit einem spezifischem Gewicht von 10 - 50 g/l, vorzugsweise von 20 g/l.

11. Verwendung einer Zusammensetzung gemäß einem der Ansprüche 1 bis 3 für das Herstellen von Geschirr.

## Claims

1. A composition for forming biologically decomposable commodities, containing at least a natural starch and maximum 40 %-by-weight water, with the starch at least partially present as a constituent of reduced natural products in the form of reduced cereals, fruits or fruits of the earth which are ground into a powder or granules and, if appropriate, dried, i.e. in a combination with other constituents of said natural products which are present inclusive of their cellulose contents, such as spelt, bran and husk, and, if appropriate, oils and/or proteins.

2. A composition according to claim 1, **characterized in that** it additionally contains cellulose-containing parts, in particular between 5 and 15 %-by-weight.

3. A composition according to claim 1 or 2, **characterized in that** it contains additives, such as - in particular between 5 and 30 %-by-weight - softeners, for example polyvalent alcohols; and/or - in particular between 5 and 10 %-by-weight - cross-linking agents, for example aldehydes; and/or - in particular between 2 and 4 %-by-weight - catalysts, for example lemon, apple, ascorbic, tartaric, adipic or acetic acid.

4. A process for manufacturing a commodity using the composition according to one of claims 1 to 3, in which the composition is subjected to a heat treatment, and if appropriate to degassing, for the purpose of plastification, gelatinization or compression, and thereafter to at least one shaping process, **characterized in that** the heat treatment is carried out in an extruder at a temperature below the glass temperature between 30 and 60°C, preferably at 40°C, and that the substance contains maximum between 20 and 40 %-by-weight, preferably 35 %-by-weight, Water.

5. A process for manufacturing a commodity using the composition according to one of claims 1 to 3, in which the composition is subjected to a heat treatment, and if appropriate to degassing, for the purpose of plastification, gelatization or compression, and thereafter to at least one shaping process, **characterized in that** the heat treatment is carried out at a temperature above the glass temperature, between 80 and 200°C, preferably between 160 and 180°C, and that the substance contains maximum between 5 and 35 %-by-weight, preferably between 12 and 18 %-by-weight, water.

6. A process according to one of claims 4 or 5, **characterized in that** the shaping process is carried out continuously, and that the composition, after treatment preferably hank- or band-shaped, is subjected to at least one of the following stages: shaping, cutting, deep-drawing, stamping, drying or toasting.

7. A process according to one of claims 4 or 5, **characterized in that** the shaping process is carried out discontinuously, at that the composition, after heat treatment preferably hankshaped or as a granulate, is subjected to at least one of the following stages: making available preforms; compression moulding, in particular under heat; drying; spraying; intermediate storage; replasticizing, preferably under heat; shaping, preferably die-casting; toasting.

8. A process according to one of claims 4 to 7, **characterized in that**, for the purpose of increasing water repulsion of the composition, oils or other suitable additives are added and/or the commodity is coated with a respective impregnating agent, for example a lacquer or in the form of a foil.

9. Use of a composition according to one of claims 1 to 3 for the manufacture of packaging material.

10. Use of a composition according to one of claims 1 to 3 for the manufacture of a filler material with a specific weight between 10 and 50 g/l, preferably 20 g/l.

11. Use of a composition according to one of claims 1 to 3 for the manufacture of crockery.

## Revendications

1. Composition appropriée au formage d'objets d'usage courant biodégradables, contenant au moins un amidon naturel et au maximum 40 % en poids d'eau, l'amidon étant présent au moins en partie en tant que constituant de produits naturels broyés sous la forme de céréales, de fruits ou de produits des champs moulus à l'état de farine ou de semoule, le cas échéant séchés, et associés aux autres constituants de ces produits naturels, qui sont présents avec leurs parties cellulosiques telles que des glumes, du son et des coques, ainsi que le cas échéant des huiles et/ou des protéines.

2. Composition selon la revendication 1, caractérisée en ce qu'elle contient en outre des parties contenant de la cellulose, en particulier entre 5 et 15 % en poids.

3. Composition selon les revendications 1 ou 2, caractérisée en ce qu'elle contient des additifs tels qu'en particulier 5 à 30 % en poids de plastifiant, par exemple des polyalcools, et/ou en particulier 5 à 10 % en poids d'agents de réticulation, par exemple des aldéhydes; et/ou, en particulier 2 à 4 % en poids de catalyseurs, par exemple d'acide citrique, malique, ascorbique, tartrique, adipique ou acétique.

4. Procédé de fabrication d'un objet d'usage courant en utilisant la composition selon l'une des revendications 1 à 3, dans lequel la composition est soumise à un traitement thermique et le cas échéant à un dégazage, pour la plastification, la gélatinisation ou la compression et est ensuite soumise à au moins un processus de déformation, caractérisé en ce que le traitement thermique est effectué à une température inférieure à la température de transition vitreuse, à 30 à 60°C, de préférence à 40°C, dans une extrudeuse, la substance contenant au maximum 20 à 40 % en poids, de préférence 35 % en poids d'eau.

5. Procédé de fabrication d'un objet d'usage courant en utilisant la composition selon l'une des revendications 1 à 3, dans lequel la composition est soumise à un traitement thermique, et le cas échéant à un dégazage, pour la plastification, la gélatinisation ou la compression et ensuite au moins une opération de déformation, caractérisé en ce que le traitement thermique est effectué à une température supérieure à la température de transition vitreuse, à 80-200°C, de préférence à 160-180°C, la substance contenant au maximum 5 à 35 % en poids, de préférence 12 à 18 % en poids d'eau.

6. Procédé selon l'une des revendications 4 ou 5, caractérisé en ce que l'opération de déformation s'effectue en continu, la composition qui se présente de préférence après le traitement thermique sous forme de jonc ou de bande, étant soumise à au moins un des stades suivants : moulage, découpage, emboutissage, estampage, séchage ou grillage.

7. Procédé selon l'une des revendications 4 ou 5, caractérisé en ce que l'opération de déformation est effectuée en discontinu, la composition qui se présente de préférence après le traitement thermique sous forme de jonc ou de granulé étant soumise au moins à l'un des stades suivants : préparation de préformes; moulage par compression, en particulier sous l'action de la chaleur; séchage; aspersion; stockage intermédiaire, replastification, de préférence en chauffant; moulage, de préférence par injection; grillage.

8. Procédé selon l'une des revendications 4 à 7, caractérisé en ce que l'on ajoute à la composition, pour augmenter son hydrophobicité, des huiles et d'autres additifs appropriés et/ou on revêt l'objet d'usage courant d'un agent d'imprégnation approprié, par exemple d'une laque ou sous la forme d'une feuille.

9. Utilisation d'une composition selon l'une des revendications 1 à 3, pour la fabrication d'une matière d'emballage.

10. Utilisation d'une composition selon l'une des revendications 1 à 3, pour la fabrication d'une matière de remplissage ayant une masse spécifique de 10 à 50 g/l, de préférence de 20 g/l.

11. Utilisation d'une composition selon l'une des revendications 1 à 3, pour la fabrication de vaisselle.
